# EUROPEAN PATENT SPECIFICATION

(11) **EP 0 415 890 B1**
(45) Date of publication and mention of the grant of the patent: **25.01.1995**
(21) Application number: 90830211.0
(22) Date of filing: 15.05.1990
(51) Int. Cl.: B65D 51/00

(54) **A filler cap for a motor-vehicle fuel tank**
Tankdeckel für Motorfahrzeug
Bouchon de réservoir à carburant pour véhicules à moteur

(30) Priority: 03.08.1989 IT 5328989 U
(43) Date of publication of application: 06.03.1991
(73) Proprietor: ERGOM MATERIE PLASTICHE S.p.A, I-10071 Borgaro Torinese (Torino) (IT)
(72) Inventor: Cimminelli, Francesco, I-10143 Torino (IT)
(74) Representative: Rambelli, Paolo

(56) References cited:
- DE-A- 3 505 136
- DE-U- 8 617 713
- FR-A- 934 147
- FR-A- 1 517 883

## Description

The present invention relates to a filler cap for a motor-vehicle fuel tank, of the type indicated in the pre-characterising portion of annexed claim 1.

A filler cap having a lock and its filler pipe is disclosed by FR-A-1517883.

DE-U-8617713.3 discloses a cap formed by a cylindrical main body, an auxiliary body engaging a base element in order to squeeze between the auxiliary body and the base element a sealing ring by rotating the auxiliary body, causing the sealing ring to expand radially. To cause the squeezing of the sealing ring is nevertheless necessary to use the two hands to stop the main body and to rotate the auxiliary body simultaneously.

According to the invention there is now proposed a filler cap having the features set forth in the characterizing portion of annexed claim 1.

As well as increasing the final cost of the cap, the use of the lock in the known filler caps has several disadvantages including the possibility of jamming in the event of frost. Moreover, given the ease of access to the cap, it may be stolen so that the serial number of the key, which is stamped on the cap (which can at present be opened by the same key as that used for the doors and the ignition) can be read and the vehicle can subsequently be stolen.

The present invention further aims to overcome the aforesaid problems by virtue of the features indicated in claim 2.

The cylindrical element is preferably operated manually by means of a key of the motor vehicle which is insertable in a shaped central seat in the cylindrical element whose external appearance resembles that of a conventional lock cylinder.

Further characteristics and advantages of the cap according to the invention will become clear from the detailed description which follows with reference to the appended drawings, provided by way of non-limiting example, in which:
Figure 1 is a longitudinal section of a cap according to the invention in a rest configuration and in an operative configuration,
Figures 2 and 3 are similar to Figure 1 and show two other embodiments of the invention, and
Figures 4-6 are views taken on the arrows IV-VI of Figures 1-3.

With reference to the drawings, a cap generally indicated 10 is adapted for mounting on a filler pipe B (shown broken outline in the drawings) of a motor-vehicle fuel tank.

The cap 10 comprises a tubular body 12 with a first, flanged end 12a and a second end 12b which has a pair of diametrally-opposed helical slots 13 arranged to cooperate with a transverse pin 14 as will become clearer from the following description.

A cylindrical element 16 of polymeric material is mounted for rotation coaxially within the tubular body 12 and has a first operating end 16a and a second end 16b with a slot 18 which is arranged in a plane passing through its central axis X-X and whose width corresponds substantially to that of the transverse pin 14.

A cup-shaped auxiliary body 20 is fitted over the end 12b of the tubular body 12 so as to be rotatable coaxially relative thereto. The auxiliary body 20 has two diametrally-opposed radial appendages 21 arranged to cooperate, as a result of the rotation of the tubular body 12, with annular shoulders 23 provided on the internal wall of the filler pipe B and interrupted by gaps shaped for the bayonet-like insertion of the radial appendages 21.

The auxiliary body 20 is kept in position by ends 14a of the pin 14 which are slidable in diametrally-opposed circumferential slots 25.

A shaped bush 26 is mounted slidably but not rotatably around a central portion of the tubular body 12, coaxially with the tubular body 12, and has a first end 26a in frontal abutment with the auxiliary body 20 and a second end 26b on which a seal 28 of elastomeric material is mounted with radial interference with its end in frontal contact with an annular edge 30 of the flanged end 12a of the tubular body 12. A helical compression spring 32 is also interposed between the flanged end 12a and the shaped bush 26 to keep the bush in abutment with the auxiliary body 20.

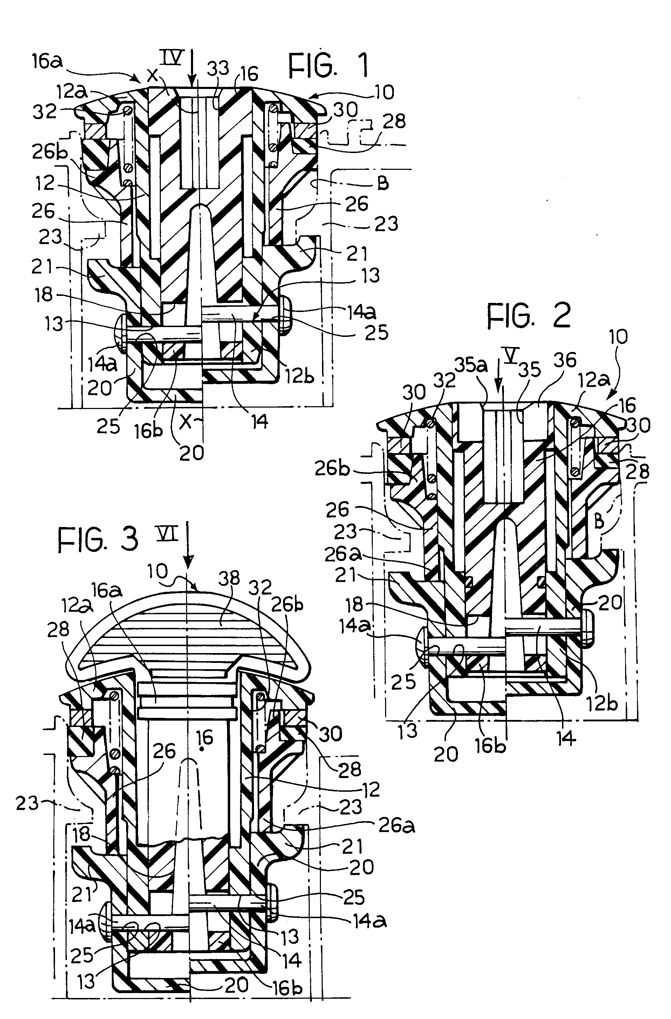

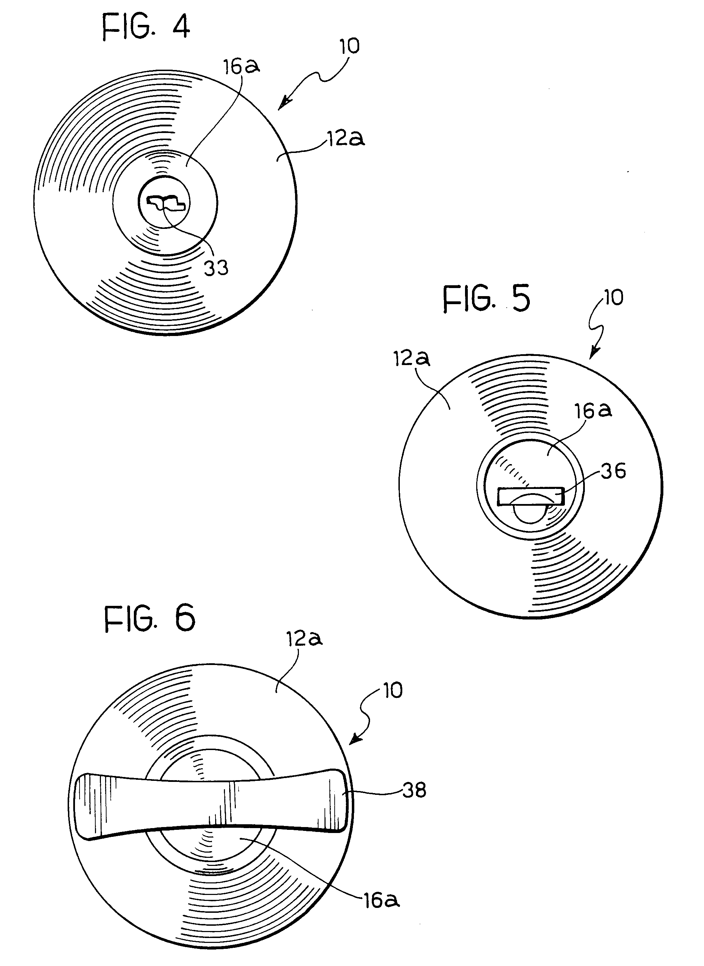

With reference to Figures 1 and 4, at its first end 16a, the cylindrical element 16 has a blind hole 33 whose cross-section corresponds to that of a key of the motor-vehicle, for example the ignition key.

In the embodiment shown in Figures 2 and 5, the cylindrical element 16 has a seat 35 with a rectangular cross-section and an end 35a which is screened by a retractable protective shield 36 exactly the same as those used on normal lock cylinders.

In the embodiment shown in Figures 3 and 6, the end 16a of the cylindrical element 16 of polymeric material has a shaped handgrip 38 which projects axially from the tubular body 12 and is arranged to rotate the cylindrical element 16.

After inserting the cap 10 in the filler pipe B, the user rotates it through a certain angle so that the radial appendages 21 of the auxiliary body 20 are situated substantially in correspondence with the shoulders 23 of the filler pipe B. This configuration is shown in the left-hand portions of Figures 1-3. The user then inserts a key in the hole 33, or in the seat 35 (for the embodiments of Figures 1 or 2), or rotates the handgrip 38 so that the transverse pin 14 slides in the helical slots 13 and in the circumferential slots 25 in the auxiliary body 20 thus raising the auxiliary body, which in turn causes the shaped bush 26 to slide axially so that the sealing ring 28 of elastomeric material is squeezed and expands radially so as to take up the clearance between the sealing ring and the wall of the filler pipe, its edge being pressed resiliently against the wall to form a seal.

It is clear from the above description that, as well as having a particularly simple construction, the cap according to the invention also provides all the advantages resulting from the frontal squeezing of the sealing ring without any sliding and therefore without the sealing ring becoming warn.

## Claims

1. A filler cap for a motor-vehicle fuel tank, comprising a cylindrical main body (12) having an annular flange (12a, 30); a first auxiliary body (20) which can rotate coaxially relative to the main body (12); a second auxiliary body (26) coaxial with the main body (12) and axially movable in respect of the flange (12a, 30) of the main body (12); a sealing ring (28) of elastomeric material coaxial with the main body (12) and interposed between the annular flange (12a, 30) of the main body (12) and the second auxiliary body (26); means (13, 14, 18, 25) for causing the second auxiliary body (26) to move axially relative to the main body (12) on relative rotation of the first auxiliary body (20), whereby an axial approaching between the second auxiliary body (26) and the flange (12a, 30) of the main body (12) caused by the relative rotation of the auxiliary body (20) causes the sealing ring (28) to be squeezed axially and hence to expand radially, bringing a peripheral edge of the sealing ring (28) into contact with an internal wall of the filler pipe (B) to form a seal,
characterised in that
the first auxiliary body (20) has radial appendages (21) for cooperating with internal annular shoulder portions (23) of the filler pipe (B) to connect the cap (10) to the filler pipe (B),
the second auxiliary body (26) is a shaped tubular element having a first end (26a) in frontal abutment of the first auxiliary body (20) and a second end which is adapted to cooperate with the sealing ring (28), and
the second auxiliary body (26) is slidably but not rotatably mounted around a central portion of the main body (12).

2. A cap according to claim 1, characterised in that the main cylindrical body (12) has a central hole in which a cylindrical element (16) of polimeric material is rotatably mounted, the cylindrical element (16) being adapted to be operated manually to rotate the first auxiliary body (20).

3. A cap according to claim 2, characterised in that the cylindrical element (16) has a central hole (33) whose cross-sectional shape corresponds to that of a key of the motor-vehicle.

4. A cap according to Claim 2, characterised in that the cylindrical element (16) has a central hole (35) of substantially rectangular cross-section with associated protection means (36).

5. A cap according to Claim 2, characterised in that the cylindrical element (16) has an operating end (38) formed essentially as a handgrip which projects outwardly from the main cylindrical body (12).

6. A cap according to any one of the proceeding claims, characterised in that the means for causing the auxiliary body (20) to move axially relative to the main body (12) comprise
- a diametral pin (14) housed in a seat (18) in the cylindrical element (16), slidable laterally in the seat and having ends (14a) which project radially from the element,
- a pair of diametrally-opposed helical slots (13) formed in the main cylindrical body (12) and arranged to cooperate with the pin (14), and
- a pair of diametrally-opposed circumferential slots (25) formed in the auxiliary body (20) and arranged to cooperate with the ends (14a) of the pin (14), the rotation of the cylindrical element (16) causing the screwing of the pin (14) in the helical slots (13) with the consequent translation of the auxiliary body (20) which causes both the frontal engagement of its radial appendages (21) with the internal annular shoulder portions (23) of the filler pipe (B) and an axial thrust to be exerted on the tubular element (26) which squeezes the sealing ring (28) axially, causing it to expand radially and bringing a peripheral edge of the sealing ring into contact with the inner wall of the filler pipe (B) to form a seal.

7. A cap according to any one of the preceding claims, characterised in that the sealing ring (28) of elastomeric material is mounted with radial interference in an end (26b) of the shaped tubular element (26).

## Patentansprüche

1. Tankdeckel für einen Benzintank eines Kraftfahrzeuges umfassend einen zylindrischen Hauptkörper (12) mit einem Ringflansch (12a, 30); einen ersten Hilfskörper (20), der in bezug auf den Hauptkörper (12) koaxial drehbar ist; einen zweiten Hilfskörper (26), der koaxial mit dem Hauptkörper (12) und in bezug auf den Flansch (12a, 30) des Hauptkörpers (12) axial bewegbar ist; einen Dichtungsring (28) aus elastomerem Material, der koaxial mit dem Hauptkörper (12) und zwischen dem Ringflansch (12a, 30) des Hauptkörpers (12) und dem zweiten Hilfskörper (26) angeordnet ist; Mittel (13, 14, 18, 25) zum Bewirken der axialen Bewegung des zweiten Hilfskörpers (26) in bezug auf den Hauptkörper (12) bei relativer Drehung des ersten Hilfskörpers (20), wobei eine durch die relative Drehung das Hilfskörpers (20) bewirkte axiale Annäherung zwischen dem zweiten Hilfskörper (26) und dem Flansch (12a, 30) des Hauptkörpers (12) das axiale Zusammendrücken und damit das radiale Ausdehnen des Dichtungsringes (28) bewirkt, wobei ein Umfangsrand des Dichtungsringes (28) in Kontakt mit einer Innenwandung des Füllrohres (B) gebracht wird, um eine Dichtung zu bilden,
dadurch gekennzeichnet, daß
der erste Hilfskörper (20) radiale Ansätze (21) zum Zusammenwirken mit inneren, ringförmigen Vorsprungteilen (23) des Füllrohres (B) besitzt, um den Deckel (10) mit dem Füllrohr (B) zu verbinden,
der zweite Hilfskörper (26) ein rohrförmiges Formteil ist mit einem ersten Ende (26a), das stirnseitig mit dem ersten Hilfskörper (20) zusammenstößt, und einem zweiten Ende, das angepaßt ist, um mit dem Dichtungsring (28) zusammenzuwirken, und
der zweite Hilfskörper (26) verschiebbar, aber nicht drehbar, um einen Mittelteil das Hauptkörpers (12) herum befestigt ist.

2. Deckel nach Anspruch 1, dadurch gekennzeichnet, daß der zylindrische Hauptkörper (12) eine zentrale Bohrung besitzt, in der ein zylindrisches Element (16) aus polymerem Material drehbar befestigt ist, wobei das zylindrische Element (16) zum manuellen Betätigen angepaßt ist, um den ersten Hilfskörper (20) zu drehen.

3. Deckel nach Anspruch 2, dadurch gekennzeichnet, daß das zylindrische Element (16) eine zentrale Bohrung (33) besitzt, deren Querschnittsform der eines Schlüssels des Kraftfahrzeuges entspricht.

4. Deckel nach Anspruch 2, dadurch gekennzeichnet, daß das zylindrische Element (16) eine zentrale Bohrung (35) von im wesentlichen rechteckigem Querschnitt mit entsprechendem Schutzmittel (36) besitzt.

5. Deckel nach Anspruch 2, dadurch gekennzeichnet, daß das zylindrische Element (16) ein Bedienungsende (38) besitzt, das im wesentlichen als ein Handgriff ausgebildet ist, der von dem zylindrischen Hauptkörper (12) nach außen ragt.

6. Deckel nach einem der vorhergehenden Ansprüche, dadurch gekennzeichnet, daß das Mittel zum Bewirken der axialen Bewegung des Hilfskörpers (20) in bezug auf den Hauptkörper (12) umfaßt
- einen diametrischen Stift (14), der in einer Aufnahme (18) in dem zylindrischen Element (16) aufgenommen, in der Aufnahme seitlich verschiebbar ist und Enden (14a) besitzt, die von dem Element radial nach außen ragen,
- ein Paar von diametral gegenüberliegenden schraubenförmigen Schlitzen (13), die in dem zylindrischen Hauptkörper (12) ausgebildet und angeordnet sind, um mit dem Stift (14) zusammenzuwirken,
- ein Paar von diametral gegenüberliegenden Ringnuten (25), die in dem Hilfskörper (20) ausgebildet und angeordnet sind, um mit den Enden (14a) des Stiftes (14) zusammenzuwirken, wobei die Drehung des zylindrischen Elementes (16) das Hochschrauben des Stiftes (14) in den schraubenförmigen Schlitzen (13) mit der folgenden Translationsbewegung des Hilfskörpers (20) bewirkt, die sowohl das stirnseitige Ineinandergreifen seiner radialen Ansätze (21) mit den inneren, ringförmigen Vorsprungsteilen (23) des Füllrohres (B) als auch eine auf das rohrförmige Element (26) ausgeübte Axialdruckkraft bewirkt, die den Dichtungsring (28) axial zusammendrückt und sein radiales Ausdehnen bewirkt und einen Umfangsrand des Dichtungsringes in Kontakt mit der Innenwandung des Füllrohres (B) zum Bilden einer Dichtung bringt.

7. Deckel nach einem der vorhergehenden Ansprüche, dadurch gekennzeichnet, daß der Dichtungsring (28) aus elastomerem Material mit radialem Übermaß an einem Ende (26b) des rohrförmigen Formelementes (26) befestigt ist.

## Revendications

1. Bouchon de réservoir à carburant pour véhicules à moteur, comprenant un corps principal cylindrique (12) ayant un flasque annulaire (12a, 30); un premier corps auxiliaire (20) qui peut pivoter coaxialement par rapport au corps principal (12); un second corps auxiliaire (26) coaxial au corps principal (12) et mobile axialement par rapport au flasque (12a, 30) du corps principal (12); une bague d'étanchéité (28) en matériau élastomère, coaxiale avec le corps principal (12) et disposée entre le flasque annulaire (12a, 30) du corps principal (12) et le second corps auxiliaire (26); des moyens (13, 14, 18, 25) pour provoquer le déplacement axial du second corps auxiliaire (26) par rapport au corps principal (12) ce en quoi par rotation relative du premier corps auxiliaire (20), un rapprochement axial entre le second corps auxiliaire (26) et le flasque (12a, 30) du corps principal (12) provoqué par la rotation relative du corps auxiliaire (20) provoquant ainsi la compression axiale de la bague d'étanchéité (28) qui se dilate radialement, créant un rebord périphérique pour la bague d'étanchéité (28) en contact avec une paroi interne du tuyau de remplissage (B) pour former une étanchéité,
caractérisé en ce que
le premier corps auxiliaire (20) a des appendices radiaux (21) destinés à coopérer avec les épaulements annulaires internes (23) du tuyau de remplissage (B) pour connecter le bouchon (10) au tuyau de remplissage (B),
le second corps auxiliaire (26) est un élément de forme tubulaire, ayant une première extrémité (26a) en butée frontale avec le premier corps auxiliaire (20) et une seconde extrémité qui est adaptée pour coopérer avec la bague d'étanchéité (28), et
le second corps auxiliaire (26) est disposé coulissant mais plaqué en rotation autour d'une partie centrale du corps principal (12).

2. Bouchon selon la revendication 1, caractérisé en ce que le corps cylindrique principal (12) a un trou central dans lequel est disposé pivotant un élément cylindrique (16) de matériau polymère, l'élément cylindrique (16) étant adapté pour être actionné manuellement en pivotement autour du premier corps auxiliaire (20).

3. Bouchon selon la revendication 2, caractérisé en ce que l'élément cylindrique (16) a un trou central (33) dont la section transversale correspond avec celle d'une clé pour véhicules à moteur.

4. Bouchon selon la revendication 2, caractérisé en ce que l'élément cylindrique (16) a un trou central (35) ayant une section transversale sensiblement rectangulaire avec des moyens de protection associés (36).

5. Bouchon selon la revendication 2, caractérisé en ce que l'élément cylindrique (16) a une extrémité de commande (38) formée essentiellement comme une poignée manuelle qui dépasse extérieurement du corps cylindrique principal (12).

6. Bouchon selon l'une quelconque des revendications précédentes, caractérisé en ce que les moyens pour provoquer le déplacement axial du corps auxiliaire (20) par rapport au corps principal (12), comprennent :
- une goupille diamétrale (14) engagée dans un logement (18) de l'élément cylindrique (16), coulissant latéralement dans le logement et dont les extrémités (14a) qui dépassent radialement de l'élément,
- une paire de fentes hélicoïdales et diamétralement opposées (13) formées dans le corps cylindrique principal (12) et disposées pour coopérer avec la goupille (14), et
- une paire de fentes périphériques et diamétralement opposées (25) formées dans le corps auxiliaire (20) et disposées pour coopérer avec les extrémités (14a) de la goupille (14), la rotation de l'élément cylindrique (16) provoquant le vissage de la goupille (14) dans les fentes hélicoïdales (13) avec pour conséquence le mouvement de translation du corps auxiliaire (20) qui provoque à la fois l'engagement frontal de ses appendices radiaux (21) avec les épaulements annulaires internes (23) du tuyau de remplissage (B) ainsi qu'une poussée axiale devant être exercée sur l'élément tubulaire (26) qui comprime axialement la bague d'étanchéité (28) qui la dilate radialement pour créer un rebord périphérique en contact avec la paroi interne du tuyau de remplissage (B) pour former une étanchéité.

7. Bouchon selon l'une quelconque des revendications précédentes, caractérisé en ce que l'anneau d'étanchéité (28) en matériau élastomère est disposé avec une interférence radiale dans une extrémité (26b) de l'élément tubulaire en forme (26).
